# EUROPEAN PATENT APPLICATION

(11) **EP 2 295 349 A2**
(43) Veröffentlichungstag der Anmeldung: **16.03.2011**
(21) Anmeldenummer: 10450145.7
(22) Anmeldetag: 15.09.2010
(51) Int. Cl.: B65G 27/02, B65G 47/14, B23P 19/00

(54) **Vorrichtung und Verfahren zum lagerichtigen Bereitstellen von Kleinteilen**

(30) Priorität: 15.09.2009 AT 14602009
(71) Anmelder: HEITEC Systemtechnik GmbH, 3340 Waidhofen an der Ybbs (AT)
(72) Erfinder: Wolfgang Mann, 2451 Hof am Leithagebirge, Wien (AT); Stephan Wagner, 2700 Wiener Neustadt, Wien (AT)
(74) Vertreter: Wildhack, Andreas

(57) **Zusammenfassung**

Vorrichtung und Verfahren zum lagerichtigen Bereitstellen von, insbesondere kopflastigen, Kleinteilen (4), wobei die Vorrichtung ein Magazin (1) zur Aufnahme der Kleinteile (4) umfasst. Erfindungsgemäß ist vorgesehen dass ein Schwingungserzeuger (2) zum Vibrieren des Magazins (1) mit einer vorgegebenen Frequenz vorgesehen ist.

## Beschreibung

Die Erfindung betrifft eine Vorrichtung und ein Verfahren zum lagerichtigen Bereitstellen von, insbesondere kopflastigen, Kleinteilen. Derartige Kleinteile sind beispielsweise Stifte für Zylinderschlösser, Nieten usw. Derartige Kleinteile können rotationssymmetrisch ausgebildet sein und z.B. einen T-förmigen Querschnitt besitzen.

Die gewerbliche Anwendung der erfindungsgemäßen Vorrichtung und des Verfahrens liegt im Bereich der Automationstechnik, insbesondere im Bereich der Industrieautomatisierung und Handhabungstechnik mit Robotern, Achssystemen od. dgl.

Aus dem Stand der Technik sind Magazine bekannt, die zur Aufnahme von Kleinteilen dienen, wobei diese Magazine typischerweise über eine nutförmige an die Form der Kleinteile angepasste Ausnehmung verfügen, in die die Kleinteile aufgrund ihrer Schwerpunktlage lagerichtig hineinfallen können.

Problematischer ist die Situation bei der Magazinierung von kopflastigen Kleinteilen, die bei direktem Einbringen in Magazine mit nutförmigen Ausnehmungen zwar in die nutförmige Ausnehmung hineinfallen, jedoch mit unterschiedlicher Ausrichtung. Die Schwerpunktlage dieser Kleinteile verhindert eine lagerichtige Anordnung. Zudem besteht das Problem, dass die Kleinteile in der nutförmigen Ausnehmung verklemmen, sodass die Förderung der Kleinteile behindert ist; ein einziger verklemmter Kleinteil kann ein gesamtes Magazin unbrauchbar machen bzw. einen erheblichen Zeitaufwand zur korrekten Befüllung des Magazins verursachen.

Aus dem Stand der Technik ist weiters eine Rüttelanlage bekannt, die kopflastige Kleinteile unter Einsatz von Vibrationen bzw. Mikrowürfen fördert. Am Ausgang der Rüttelanlage befindet sich eine Öffnung, die die geförderten Kleinteile nur in einer vorgegebenen Ausrichtung passieren lässt. Die Teilchen werden anschließend in ein nicht vibriertes Magazin oder eine Vereinzelungvorrichtung überführt. Es besteht der wesentliche Nachteil, dass mit solchen Rüttelvorrichtungen ein Magazin nur sehr langsam befüllt werden kann. Eine Wendevorrichtung sorgt dafür, dass die Kleinteile mit dem Kopf nach oben abgreifbar sind.

Aufgabe der Erfindung ist es somit, eine Vorrichtung mit einem Magazin zu schaffen, die den Vorteil bietet, dass insbesondere kopflastige Kleinteile lagerichtig und rasch in das Magazin eingeordnet werden können.

Die Erfindung löst die Aufgabe bei einer Vorrichtung zum lagerichtigen Bereitstellen von, insbesondere kopflastigen, Kleinteilen, wobei die Vorrichtung ein Magazin zur Aufnahme der Kleinteile umfasst, dadurch, dass ein Schwingungserzeuger zum Vibrieren des Magazins mit einer vorgegebenen Frequenz vorgesehen ist.

Erfindungsgemäß ergibt sich der Vorteil, dass die Kleinteile exakt und rasch in das Magazin eingeordnet werden können.

Ein weiterer bevorzugter Aspekt der Erfindung sieht vor, dass das Magazin in Form einer Platte mit zumindest einer in einer Oberfläche ausgebildeten Ausnehmung zur Aufnahme der Kleinteile vorliegt. Dies ermöglicht eine besonders einfache Fertigung und Beschickbarkeit des Magazins und ein rasches Einordnen der Kleinteile in das Magazin.

Bei einer bevorzugten Ausführungsform der Erfindung kann vorgesehen sein, dass an der oder einer in Gebrauch nach oben gerichteten Seite des Magazin zumindest eine oberflächlich ausgenommene, fortlaufende nutförmige Ausnehmung ausgebildet ist.

Vorteilhafterweise kann vorgesehen werden, dass die zumindest eine nutförmige Ausnehmung spiralförmig oder gerade verläuft oder aufeinanderfolgend gekrümmte und gerade Abschnitte aufweist. Hierdurch steht ein großer Teil der Gesamtoberfläche des Magazins zur Magazinierung zur Verfügung.

Es kann vorteilhafterweise vorgesehen sein, dass der Querschnitt der nutförmigen Ausnehmung über die gesamte Längserstreckung identisch ist. Dies hat den Vorteil, dass eine komplizierte Ausgestaltung des Magazins mit Schikanen zum Entfernen oder Wenden falsch angeordneter Kleinteile entfallen kann.

Weiters kann vorgesehen sein, dass an der die nutförmige Ausnehmung tragenden Oberfläche des Magazins ein Ring vorgesehen ist, der einen Teil des Oberflächenbereichs, in dem die nutförmige Ausnehmung vorliegt, zumindest teilweise, insbesondere den gesamten Oberflächenbereich bis auf einen durch die nutförmigen Ausnehmung gebildeten Auslassbereich, verschließt. Hierdurch wird verhindert, dass die Kleinteile während der Beaufschlagung des Magazins mit Vibrationen vom Magazin fallen.

Zudem kann vorgesehen sein, dass die nutförmige Ausnehmung (3) derart von der Seite, des Magazins her abgedeckt wird, die die nutförmige Ausnehmung trägt, dass im Inneren der nutförmige Ausnehmung ein durchgängiger Kanal ausgebildet wird.

Ein besonders rasches und einfaches Einordnen der Kleinteile in das Magazin und ein Verklemmen von Kleinteilen wird verhindert, wenn mit dem Schwingungserzeuger auf das Magazin eine Vibration in Form einer sich laufend umkehrenden Rotationsbewegung oder einer linearen Hin- und Herbewegung ausübbar ist, wobei diese Bewegungen periodisch und mit einstellbarer Frequenz erfolgen.

Sofern vorgesehen ist, dass die Rotationsschwingung oder die lineare Schwingbewegung in einer Ebene parallel zur Oberfläche des Magazins erfolgen, in der die nutförmige Ausnehmung ausgebildet ist, wird erreicht, dass die eingeordneten Kleinteile entlang der nutförmigen Ausnehmung fortgefördert werden, was die Aufnahme weiterer Kleinteile, insbesondere in der Mitte einer spiralförmigen Ausnehmung, erleichtert. Zudem kann die Beschickung mit Kleinteilen auch mehrstufig erfolgen, wobei zunächst eine Anzahl von Kleinteilen auf das Magazin aufgebracht wird und im Zuge des Vibrationsvorgangs, insbesondere in die Mitte des Magazins weitere Kleinteile eingebracht werden.

Eine besondere Weiterbildung der Erfindung sieht vor, dass der Schwingungserreger auf eine niedrige, insbesondere die zweitniedrigste, Resonanzfrequenz des vom Magazin und der Schwingplatte des Schwingungserregers gebildeten Schwingsystems, gegebenenfalls mit Abweichungen von ±10%, vorzugsweise von ±5%, von dieser Resonanzfrequenz einstellbar oder eingestellt ist. Die Kleinteile werden in eine Hüpfbewegung versetzt bzw. werden von der Resonanzschwingbewegung erfasst und in einen Bewegungs- bzw. Schwingungszustand versetzt, der das Einordnen in das Magazin erleichtert.

Ferner kann vorgesehen werden, dass der Schwingteil bzw. die Schwingplatte des Schwingungserzeugers mit dem Magazin direkt und starr verbunden, vorzugsweise verschraubt, ist. Dies ermöglicht eine besonders gute Schwingungsübertragung und erlaubt ein Einsortieren mit geringem Energieaufwand.

Ein weiterer bevorzugter Aspekt der Erfindung sieht vor, dass der kleinste bzw. innerste Radius der einer spiralförmigen Ausnehmung so groß vorgegeben ist, dass in ihrem innenliegenden Bereich die Kleinteile bei Vibration des Magazins in der nutförmigen Ausnehmung verklemmungsfrei förderbar sind.

Weiters kann vorgesehen werden, dass das randnahe Ende der nutförmigen Ausnehmung, vorzugsweise annähernd geradlinig zum Rand der Platte bzw. des Magazins hingeführt ist und dort eine, gegebenenfalls verschließbare, Abgabeöffnung ausbildet. Es kann eine kontinuierliche Förderung von Kleinteilen vorgenommen werden, sodass ausgerichtete Kleinteile aus dem Magazin laufend entnommen und auszurichtende Kleinteile als Schüttgut dem Magazin laufend zugeführt werden können.

Das Einordnen der Kleinteile in die Ausnehmung wird unterstützt bzw. verbessert, wenn auf der Oberfläche des Magazins ein einen Schüttbereich für die Klemmteile begrenzender Abstreifer, insbesondere eine Abstreifplatte, aufliegt bzw. mit dem Magazin verbunden ist, der gegebenenfalls als Teil des Schwingsystems bei Ermittlung der Resonanzfrequenz Berücksichtigung findet. Ausnehmungen in diesem Abstreifer bzw. dieser Abstreifplatte lassen die Beschickung der Ausnehmungen mit Kleinteilen zu. Durch das Abstreifen erfolgt eine Lageveränderung er Kleinteile, welche das Einordnen unterstützt.

Aufgabe der Erfindung ist es ferner, ein Verfahren zu schaffen, das den Vorteil bietet, dass Kleinteile lagerichtig und rasch in ein Magazin eingeordnet werden können.

Die Erfindung löst die Aufgabe mit einem Verfahren zum lagerichtigen Beschicken eines Magazins mit, insbesondere kopflastigen, Kleinteilen, wobei das Magazin zumindest eine oberflächlich ausgenommene, fortlaufende nutförmige Ausnehmung zur Aufnahme und gegebenenfalls zum Befördern der Kleinteile aufweist, dadurch, dass die in beliebiger Ausrichtung auf die zumindest eine nutförmige Ausnehmung aufweisende Oberfläche des Magazins aufgebrachten Kleinteile durch dem Magazin erteilte Vibrationen in die Ausnehmung eingeordnet werden. Mit diesem Verfahren ergibt sich der Vorteil, dass die Teile rasch und exakt in das Magazin eingeordnet werden können.

Ein bevorzugter Aspekt der Erfindung sieht vor, dass eine Resonanzfrequenz des vom Magazin und der damit starr verbundenen Schwingplatte eines Schwingungserregers gebildeten Schwingsystems ermittelt und das Schwingsystem mit dieser Frequenz, vorzugsweise mit Abweichungen von ±10%, insbesondere ±5%, vibriert wird. Hierdurch werden die Kleinteile in einen vorteilhaften Schwingungszustand versetzt, der die Kleinteilchen in das Magazin rasch einordnet. Sofern das Magazin mit einer sich laufend umkehrenden Rotationsschwingung vibriert wird, wird das Einordnen in ein Magazin mit einer spiralförmigen Ausnehmung erleichtert.

Von Vorteil ist es, wenn vorgesehen wird, dass das Schwingsystem mit einer niedrigen Resonanzfrequenz, vorzugsweise der zweit- oder drittniedrigsten Resonanzfrequenz, vibriert wird. Auch die niedrigste Resonanzfrequenz kann eingesetzt werden; bei dieser niedrigsten Resonanzfrequenz kann allerdings der Fall eintreten, dass die Amplitude der Schwingungsbewegung für spezielle Formen aufweisende Kleinteilchen zu groß ist und diese aus der Ausnehmung wieder heraushüpfen.

Es ist möglich, den Ausnehmungen verschiedenförmigen Verlauf zu verleihen. Es können die Ausnehmungen gerade oder spiralförmig oder auch in anderer Form ausgebildet werden. Auch die Ausbildung von parallel verlaufenden Ausnehmungen ist möglich, vorzugsweise von parallel verlaufenden, geraden Ausnehmungen. Die Ausnehmungen können begrenzt jeweils bis zum Rand der Platte geführt sein und dort Abgabeöffnungen für die Kleinteile ausbilden.

Vorteilhaft ist es hierbei, wenn das Magazin in einer Bewegungsrichtung vibriert bzw. zur Vibration durch den Schwingungserreger angeregt wird, die an den Verlauf bzw. an die Richtung der nutförmigen Ausnehmung angepasst bzw. angenähert ist bzw. den Abschnitten der Ausnehmungen möglichst angenähert ist, die zum größten Teil in derselben Richtung ausgerichtet sind bzw. die der Richtung entspricht, in der der größte Teil der Ausnehmung verläuft. Die Bewegungsrichtung der Schwingung wird somit vorteilhafterweise in an die Richtung der Ausnehmungen angepasst, welche Richtung vom größten Teil der Länge der Ausnehmung eingenommen wird. Es ist somit zweckmäßig, Platten mit spiralförmiger Ausnehmung mit einer Rotationsbewegung und Platten mit geraden Ausnehmungen mit einer linearen, in Richtung der Ausnehmung erfolgenden Schwingbewegung zu vibrieren.

Von Vorteil ist es, wenn das Magazin mit einer sich laufend umkehrenden, insbesondere periodischen, Rotationsbewegung oder mit einer linearen Bewegung vibriert wird, wobei vorzugsweise die Richtung der Rotationsbewegung bzw. der linearen Bewegung normal zur Querschnittsebene der nutförmigen Ausnehmung steht.

Um die Fehlerrate beim Einordnen zu minimieren, kann es von Vorteil sein, wenn mit Fehllage in der Ausnehmung befindliche Kleinteile im Zuge ihrer Förderung längs der Ausnehmung an einem aus der Ausnehmung herausragenden Abschnitt angestoßen bzw. angehalten werden und damit in eine Lage verstellt werden, in der sie durch Vibration in die Ausnehmung eingeordnet werden können.

Um eine verbesserte Handhabung des Magazins bei der Abgabe von Kleinteilen zu erreichen, kann vorgesehen sein, dass auf der selben Oberflächenseite des Magazins, an der auch die nutförmige Ausnehmung vorgesehen ist, eine Abdeckplatte derart montiert wird, dass ein durch die nutförmige Ausnehmung 3 und die Abdeckplatte begrenzter, insbesondere mit Druckluft beaufschlagbarer, Kanal entsteht.

Dieser, vorzugsweise luftdichte, Kanal kann an seinem einen, insbesondre zentral auf dem Magazin gelegenen Endbereich, eine Einlassöffnung zur Beaufschlagung mit Druckluft besitzen.

Die Erfindung wird anhand der folgenden Zeichnungen beispielhaft und ohne Einschränkung des allgemeinen erfinderischen Gedankens erläutert.
Fig. 1 zeigt ein Magazin mit spiralförmiger Ausnehmung mit darauf aufgebrachten, nicht ausgerichteten Kleinteilen in Schrägansicht.
Fig. 2 zeigt ein Magazin mit in der Ausnehmung eingeordneten Kleinteilen in Schrägansicht.
Fig. 3 zeigt das Magazin gemäß Fig. 2 mit einem Schwingungserreger in Draufsicht.
Fig. 4 zeigt das Magazin mit einem Schwingungserreger in Seitenansicht.
Fig. 5 zeigt das Magazin mit darauf aufgebrachten, nicht ausgerichteten Kleinteilen in Schrägansicht.
Fig. 6 zeigt eine Ausführungsform eines Magazins.

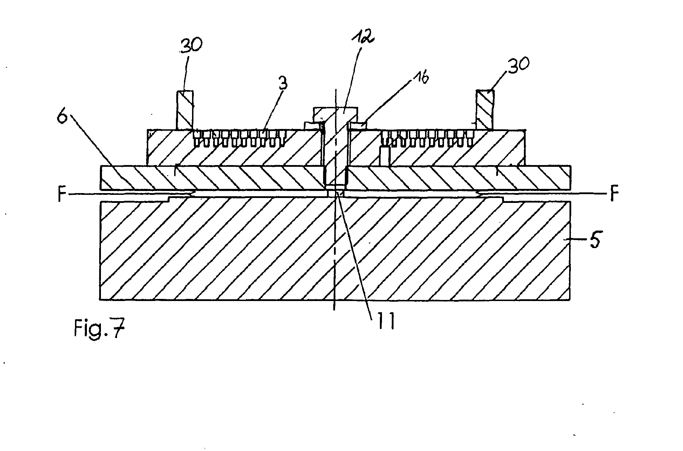

Fig. 7 zeigt eine Ausbildung der Erfindung mit einem Ring, der verhindert, dass die Kleinteile vom Magazin fallen.

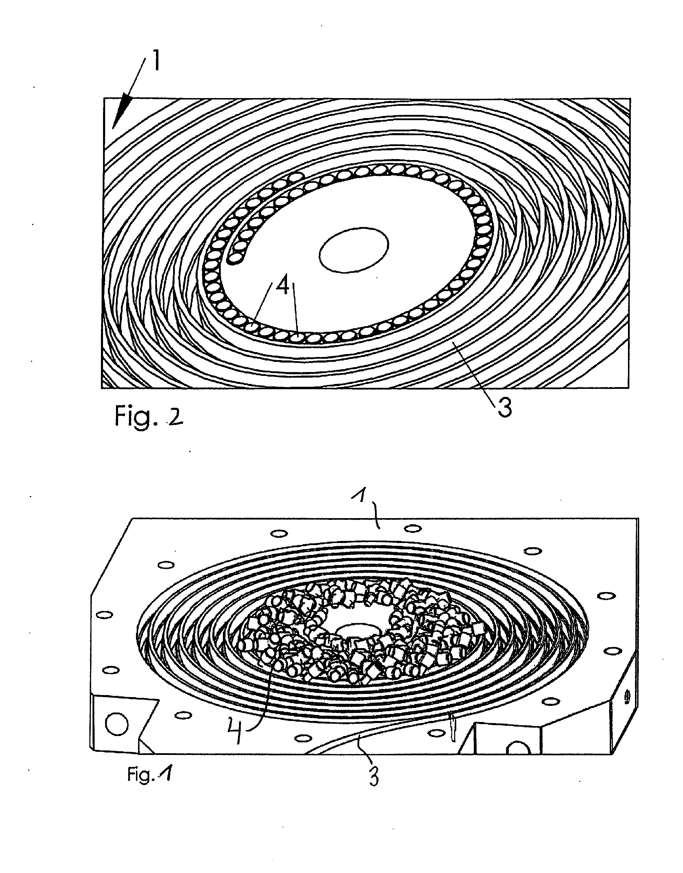

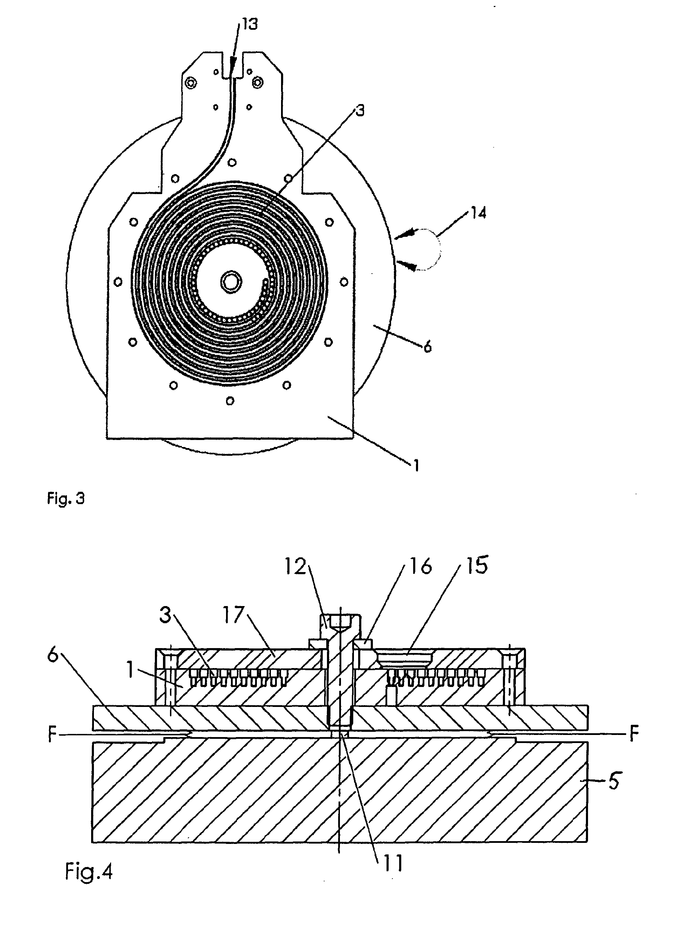

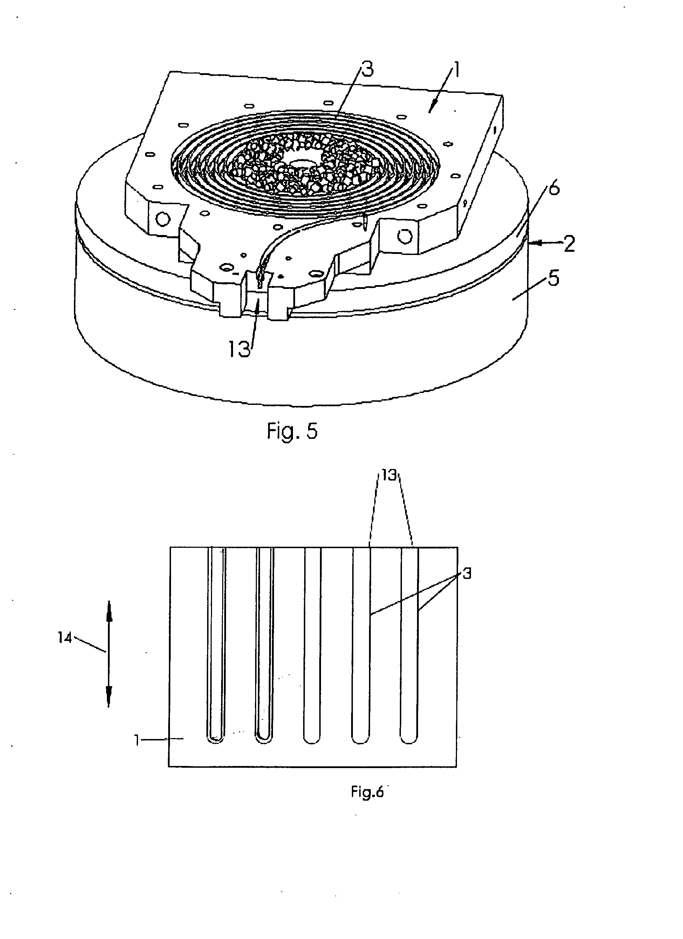

Die in Fig. 5 dargestellte Vorrichtung umfasst ein Magazin 1 sowie einen unter dem Magazin 1 angeordneten Schwingungserreger 2. Das Magazin 1 hat die Grundform einer Platte und weist etwa eine Dicke von 1 bis 5 cm auf. Die Platte weist an ihrer Oberfläche eine sprialförmige, nutförmige Ausnehmung 3 auf, deren Querschnitt, wie aus Fig. 4 ersichtlich, normal zur Längserstreckung 5 der nutförmigen Ausnehmung 3 an die aus Fig. 2 ersichtliche Form der Kleinteile 4 angepasst ist.

Alternativ zur kreisförmigen Spiralform kann die nutförmige Ausnehmung 3 auch noch andere Formen, beispielsweise die Form einer elliptischen Spirale aufweisen. Auch ein Magazin mit einer Vielzahl von Ausnehmungen z.B. mit einer Anzahl von parallel angeordneten Nuten ist möglich. Ein wesentlicher Vorteil der Spiralform liegt darin, dass die nutförmige Ausnehmung 3 lange ausgebildet werden kann und eine große Anzahl von Kleinteilen 4 aufnehmen kann.

Fig. 6 zeigt ein Magazin 1, in dem eine Anzahl von parallel verlaufenden Ausnehmungen 3 ausgebildet ist, die bis zum Rand der Platte geführt sind und dort in einer Entnahme- bzw. Abgabeöffnung 13 enden. Während des Einordnens der Kleinteile 4 in die Ausnehmungen 3 können diese Abgabe- bzw. Entnahmeöffnungen 10 verschlossen werden, z.B. durch Abdecken mit einem Klebeband.

Prinzipiell ist es möglich, die Form des Verlaufes der Ausnehmungen 3 beliebig zu wählen. Die Zeitdauer des Einordnens der Kleinteile 4 in die Ausnehmungen 3 wird jedoch verkürzt, wenn die Vibration der Platte bzw. des Magazins 1 in eine Richtung erfolgt, welche der Richtung der Ausnehmungen 3 weitgehend folgt. Bei einer spiralförmigen Ausnehmung 3 wird somit eine Rotationsbewegung bevorzugt und bei gerade parallel ausgerichteten Ausnehmungen 3 eine lineare, in Richtung der Ausnehmung 3 erfolgende Linearschwingung.

Die nutförmige Ausnehmung 3 ist oberflächlich in dem plattenförmigen Magazin 1 ausgebildet. Die nutförmige Ausnehmung 3 kann durch Ausfräsen aus dem plattenförmigen Grundkörper des Magazins 1 erstellt werden. Der Querschnitt der Nuten senkrecht zu ihrem Verlauf ist der Form der vorzugsweise rotationssymmetrischen Kleinteile 4 angepasst.

Wie in den Fig. 3, 4 und 5 dargestellt, ist das Magazin 1 mit einem Schwingungserreger 2 verbunden. Der Schwingungserreger 2 weist eine Standbasis bzw. ein Gehäuse 5 sowie einen Schwingteil 6 auf. Das Magazin 1 ist mit dem Schwingteil 6 starr und direkt verbunden. Dabei ist eine Verschraubung des Schwingteiles 6 mit dem Magazin 1 mit einer Schraube 12 vorteilhaft, da so die dem Schwingteil 6 von dem Schwingungserreger 2 erteilten Vibrationen am besten auf das Magazin 1 übertragen werden können.

Der Schwingungserreger 2 ist bewegungsfest angeordnet bzw. kann an einem im Vergleich zum Schwingsystem, das vom Magazin 1 und dem Schwingteil 6 gebildet wird, schweren Körper befestigt sein, sodass beim Vibrieren der Schwingteil 6 und das Magazin 1 gegenüber dem Gehäuse 5 vibriert werden, das Gehäuse 5 jedoch nur geringen Vibrationen ausgesetzt ist.

Die Vibrationsbewegung kann in Form einer sich laufend periodisch umkehrenden Rotationsschwingung erfolgen. Der Schwingungserzeuger 2 verfügt dazu über einen Schwingteil 6, der um eine zentrale Achse rotierbar gelagert ist. Sobald der Schwingteil 6 in Rotation versetzt wird, wird nach einer vorgegebenen Zeitspanne, etwa im Bereich von wenigen bis zu 100 Millisekunden, die Rotationsrichtung des Schwingteils umgekehrt. Diese Umkehrung der Rotationsrichtung erfolgt laufend bzw. periodisch und wird vom Schwingteil 6 auf das Magazin 1 übertragen.

Vorteilhafterweise wird die Vibration auf eine Frequenz eingestellt, die das Schwingsystem, umfassend das Magazin 1 und den Schwingteil 6, in Resonanzschwingungen versetzt. Um in Resonanz vibrieren zu können, ist der Schwingteil 6 über Federn F mit dem Schwingungserzeuger 2 verbunden und von einem Antriebsteil 11 betätigt bzw. beaufschlagt bzw. wird mit diesem der Schwingplatte 6 die entsprechende Richtung der Schwingungsbewegung erteilt. Die Resonanzfrequenz wird von der schwingenden Masse und von den Federkonstanten der Federn F bestimmt, mit denen das Schwingsystem auf der Basis bzw. dem Gehäuse 5 des Schwingungserregers gelagert ist. Die Masse des Schwingungssystems wird durch die Schwingplatte 6, das Magazin 1, die Federn F, allenfalls den Abstreifer 17 und allenfalls die aufgebrachten Kleinteile 4 bestimmt. Die vorgesehenen Federn sind beliebiger bekannter Bauart. Frequenzeinstellbare Schwingungserreger mit Schwingplatten zählen zum Stand der Technik. Das Auffinden der Resonanzfrequenzen ist mit einem Schwingungserreger 2 mit einstellbarer Frequenz für den Fachmann durch schrittweises Anheben oder Absenken der Vibrationsfrequenz problemlos möglich. Es ist von Vorteil, wenn die tatsächlich verwendete Frequenz in einem Bereich von ±10% von der Resonanzfrequenz liegt.

Von Vorteil ist es, wenn eine möglichst niedrige Resonanzfrequenz eingestellt wird, da bei diesen niedrigen Resonanzfrequenzen die Schwingungsamplitude relativ groß ist und damit die Kleinteile 4 in entsprechende Bewegung versetzt werden können. Ist die gewählte Resonanzfrequenz zu niedrig, so beginnen die Kleinteile zu hüpfen, ohne sich einzuordnen. Ist die gewählte Resonanzfrequenz zu hoch, so erfolgt das Einordnen in die Ausnehmung zu langsam. In der Praxis hat es sich als vorteilhaft erwiesen, wenn die zweit- oder drittniedrigste Resonanzfrequenz verwendet wird.

Die Rotationsachse des Schwingungsteils 6 steht normal auf die Oberfläche des Magazins 1, in der die nutförmige Ausnehmung 3 vorgesehen ist.

Der minimale Krümmungsradius der durch die nutförmige Ausnehmung 3 gebildeten Spirale wird so groß gewählt, dass die Kleinteile 4 im Inneren der Spirale nicht verklemmen. Wie groß dieser minimale Krümmungsradius ist, kann der Fachmann durch einfache, an die zu magazinierenden Kleinteile 4 angepasste Versuche feststellen, wobei zunächst eine Spiralform für die nutförmige Ausnehmung 3 gewählt wird, die bis zum Mittelpunkt der Spirale reicht. Anschließend wird das erfindungsgemäße Verfahren mit Aufbringen der Kleinteile 4 auf das Magazin 1 und Rotation mit Resonanzfrequenz durchgeführt. Dabei werden sich im Inneren der Spirale Kleinteile 4 verklemmen, während im Außenbereich der Spirale die Kleinteile 4 verklemmungsfrei weiterbefördert werden. Der minimale Krümmungsradius liegt bei jenem Abstand vom Mittelpunkt der Spirale, an dem keine Kleinteile 4 verklemmen bzw. die Kleinteile 4 verklemmungsfrei in der Ausnehmung 3 nach außen gefördert werden.

Um die Kleinteile dem Magazin entnehmen zu können, ist die nutförmige Ausnehmung 3 zum Rand des plattenförmigen Grundkörpers des Magazins 1 geführt, wo eine Abgabeöffnung 13 vorgesehen ist. Dabei kann vorteilhafterweise vorgesehen sein, dass der Krümmungsradius in diesem Bereich der Spirale weiter vergrößert ist und sich die Ausnehmung 3 zum Rand des plattenförmigen Grundkörpers des Magazins 1 in annähernd rechtem Winkel öffnet, wobei die Ausnehmung 3 über diesen Bereich annähernd geradlinig verläuft. Damit können die Kleinteile 4 entweder in ein weiteres Magazin 1 überführt werden oder von einem Roboter direkt lagerichtig abgegriffen werden. An dieser Stelle kann auch eine Kamera oder eine andere Überprüfungseinheit zur Prüfung der Ausrichtung des jeweiligen Kleinteils 4 angeordnet sein. Falls ein Kleinteil 4 nicht korrekt ausgerichtet bereitgestellt wird, kann dieser Teil entweder entfernt oder zu den übrigen noch nicht ausgerichteten Kleinteilen 4 rückgeführt werden.

Es können aber auch Magazine befüllt werden, die keine Abgabeöffnungen besitzen.

Die Kleinteile 4 können sowohl auf das bereits in Vibration versetzte Magazin 1 als auch auf das ruhende Magazin 1 aufgebracht werden. Die Ausrichtung der Kleinteile 4 ist dabei ohne Belang. Typischerweise werden die Kleinteile 4 in großer Zahl und nicht ausgerichtet auf das Magazin 1 geschüttet bzw. aufgebracht. Eine typische Anordnung einer Menge von auszurichtenden Kleinteilen 4 ist in Fig. 1 dargestellt.

Nach dem Beginn der Vibration werden die Kleinteile 4 in Schwingung versetzt und beginnen auf der das Magazin 1 bildenden Platte zu hüpfen. Durch die Vibration ordnen sich die Kleinteile 4 überraschenderweise lagerichtig in der nutförmigen Ausnehmung 3 ein. Wird die Vibration, wie zuvor beschrieben, als Rotationsbewegung auf das Magazin 1 aufgebracht, werden die Kleinteile 4 entlang der spiralförmigen Ausnehmung 3 entlang nach außen gefördert. Nachdem die Teilchen vom Inneren der durch die nutförmige Ausnehmung 3 gebildeten Spirale immer weiter in Richtung des äußeren Endes der Spirale gewandert sind, werden auf das Innere der nutförmigen Ausnehmung 3 weitere Kleinteile 4 aufgebracht bzw. geschüttet.

Im vorliegenden Beispiel wurde für das Magazin 1 eine Plattengröße von etwa 15x15 cm mit einer Plattenstärke von etwa 10mm gewählt. Der minimale Krümmungsradius beträgt etwa 2cm. Die nutförmige Ausnehmung 3 weist eine Tiefe von etwa 6mm auf, dies entspricht der Längserstreckung der Kleinteile 4. Als Frequenz wurde die drittniedrigste Resonanzfrequenz des Schwingungssystems, in diesem Fall etwa 64Hz gewählt.

In Fig. 6 ist ein Ausführungsbeispiel für ein Magazin 1 dargestellt, in dem eine Anzahl von parallel verlaufenden nutförmigen Ausnehmungen 3 ausgebildet ist. Dieses plattenförmige Magazin 1 wird in Richtung des Pfeiles 14 vibriert, der eine lineare Schwingungsrichtung darstellt, im Gegensatz zu dem in Fig. 3 dargestellten Pfeil 14, der eine Rotationsschwingbewegung verdeutlicht.

Das Schwingsystem, das mit Resonanzfrequenz vibriert wird, umfasst das Magazin 1 sowie den Schwingteil 6 und eine allenfalls die Oberfläche des Magazins 1 deckende Platte 17. Bei dieser Platte handelt es sich um einen Abstreifer, der vorgesehen ist, um sich in einer Fehllage befindliche Kleinteile 4, die sich in der Ausnehmung 3 festgeklemmt haben, zu lockern bzw. zu lösen und in eine Stellung zu verstellen, in der sie wieder der Vibration unterworfen und in die Ausnehmung 3 eingeordnet werden können. Eine derartiger plattenförmiger Abstreifer wird beispielsweise von der Ring- bzw. Beilagscheibe 16 der Schraube 12 getragen, mit der die Platte 1 auf dem Schwingteil 6 festgeschraubt ist. Der Abstreifer 17 besitzt zumindest eine beispielsweise kreisförmige oder quadratische Ausnehmung 15, durch welche die Kleinteile auf die Oberfläche des Magazins 1 aufgebracht werden können. Sobald sich ein Kleinteil, das sich in der Ausnehmung derart verklemmt hat bzw. derart zu liegen kommt, dass es zwar weiterbefördert wird, jedoch sich nicht in die geordnete, das heißt in die der Ausnehmung 3 angepasste Lage verstellen kann, in Anlage an die Innenwand bzw. Kante der Ausnehmung 15 gelangt, wird es verstellt und kann von den Vibrationen in die Ausnehmung 3 eingeordnet werden. Durch die Förderbewegung des Teilchens wird dieses in Richtung der Spirale nach außen bzw. in Richtung der Abgabeöffnung 13 weitergefördert, bei der Kante der Öffnung 15 des Abstreifers bzw. der Abstreifplatte 17 jedoch umgelegt bzw. lageverändert. Anstelle eine Platte mit Ausnehmungen als Abstreifer 17 vorzusehen, könnte auch zumindest eine das Magazin 1 bzw. die Ausnehmungen 3 überspannende stegförmige Platte oder Leiste angeordnet werden.

Auch die Masse des Abstreifers 17 kann bei der Einstellung der Resonanzfrequenz berücksichtigt werden, obwohl derartige aus Kunststoff gefertigte Platten bzw. Leisten gegenüber den massiven, aus Metall bestehenden Magazinen 1 und Schwingteilen 6 die Resonanz nur unwesentlich beeinflussen. Gleiches gilt für die auf das Magazin 1 aufgebrachten Kleinteile 4, deren Gewicht die Resonanzfrequenz des Schwingsystems nur unwesentlich beeinflussen.

Die Aufrichtung der einzelnen Kleinteile 4 erfolgt in der erfindungsgemäßen Anordnung vorzugsweise ausschließlich auf Grund der mittels des Schwingungsanregers 2 auf das Magazin aufgebrachten Schwingung. Demgemäß ist es auch nicht notwendig, die Aufrichtung der Kleinteile 4 durch eine an die spezielle Form des jeweiligen Kleinteils 4 angepasste nutförmige Ausnehmung 3, wie aus dem Stand der Technik bekannt, einzusetzen. Vielmehr kann die Ausnehmung 3 über ihre, insbesondere spiralförmige oder gerade, Längserstreckung völlig gleichartig bzw. homogen aufgebaut sein. Der Querschnitt der nutförmigen 3 Ausnehmung kann über die gesamte Längserstreckung identisch sein. Somit unterscheidet sich eine derartige Ausgestaltung der Erfindung von den aus dem Stand der Technik üblichen Schikanen, die durch den konkreten Verlauf der nutförmigen 3 Ausnehmung in Längsrichtung das ausrichtungsabhängige Verkippen der Kleinteile 4 bewirken.

Vorteilhafterweise kann ein am Magazin 1 befestigter Ring 30 vorgesehen sein, der auf der selben Oberflächenseite montiert ist, an der auch die nutförmige Ausnehmung 3 vorgesehen ist. Der Ring 30 ist vorteilhafterweise so hoch ausgebildet, dass die Kleinteile 4 auch bei Vibration nicht über den Ring 30 hüpfen können. Vorteilhafterweise kann vorgesehen sein, dass der Ring 30 etwa zumindest doppelt, insbesondere zumindest vier mal, so hoch ist wie die längste Abmessung der Kleinteile 4.

Der Ring 30 umschließt einen Teil des Oberflächenbereichs, in dem die nutförmige Ausnehmung 3 vorliegt. Vorzugsweise umschließt der Ring 30 den gesamten Oberflächenbereich bis auf einen Auslassbereich, der in einen Auslass der nutförmigen Ausnehmung bzw. des Kanals mündet. Die Kleinteile 4 können somit innerhalb des durch den Ring 30 begrenzten Bereichs auf den die nutförmige Ausnehmung 3 tragenden Oberflächenbereich aufgebracht werden. Wird das Magazin 1 in Vibration versetzt, wird durch den Ring verhindert, dass die Kleinteile 4 von der Oberfläche des Magazins fallen.

Um die Vorrichtung sowohl zum Beschicken mit den Kleinteilen 4 als auch zur Abgabe der Kleinteile 4 verwenden zu können, kann die Erfindung folgendermaßen weitergebildet werden: Auf das Magazin 1 wird eine nicht dargestellte Abdeckplatte aufgebracht. Die Abdeckplatte kann gleich ausgebildet sein wie der Abstreifer 17, dargestellt in Fig. 4, jedoch mit dem Unterschied, dass die Abdeckplatte nicht die Ausnehmung 15 aufweist. Die Abdeckplatte kann beispielsweise als durchgängige planparallele Platte ausgebildet sein, deren Abmessungen an das Magazin 1 angepasst sind. Insbesondere kann die Abdeckplatte direkt im Inneren des Rings 30 an den Ring 30 anschließen.

Alternativ kann bei der in Fig. 4 beschriebenen Vorrichtung die Ausnehmung 15 des Abstreifers 17 durch ein der Form der Ausnehmung entsprechendes Verschlussstück verschlossen sein und somit eine Abdeckplatte ausgebildet werden.

Die Abdeckplatte ist auf der selben Oberflächenseite montiert, an der auch die nutförmige Ausnehmung 3 vorgesehen ist. Bei einer spiralförmigen Ausformung der nutförmigen Ausnehmung 3 liegt die Abdeckplatte bündig auf der Oberfläche des Magazins 1 auf, in der die nutförmige Ausnehmung 3 vorgesehen ist. Somit entsteht ein durch die nutförmige Ausnehmung 3 und die Abdeckplatte begrenzter Kanal. An einem Ende des Kanals, insbesondere im Innenbereich der spiralförmigen nutförmigen Ausnehmung 3, kann ein Druckluftanschluss angeordnet werden. Am anderen, insbesondere radial außen gelegenen, Ende des Kanals bzw. der nutförmigen Ausnehmung befindet sich eine Entnahme- bzw. Abgabeöffnung 13 (Fig. 3). Durch Anlegen von Druckluftstößen am Druckluftanschluss können die Kleinteile 4 durch den Kanal befördert werden, insbesondere können hierdurch die Kleinteile 4 jeweils einzeln an der Entnahme- bzw. Abgabeöffnung 13 bereitgestellt werden.

Weiters kann vorgesehen sein, dass die Abdeckplatte den gesamten Oberflächenbereich des Magazins 1 im Innenbereich des Rings 30 abdeckt und nach dem Einbringen der Kleinteile 4 mit dem Magazin 1 in Verbindung bringbar ist bzw. auf der Oberfläche des Magazins 1 aufgelegt wird.

Die Eigenfrequenz bzw. Resonanzfrequenz der Vorrichtung wird bestimmt durch die Masse des Magazins und der Schwingplatte 6 des Schwingungserregers 2 bzw. durch das Trägheitsmoment der Schwingplatte 6 des Schwingungserregers 2 um die Rotationsachse des Schwingungserregers 2 sowie gegebenenfalls durch die Masse des Rings 30.

Grundsätzlich können beliebige Schwingungserreger 2 zur Anregung des Magazins herangezogen werden; insbesondere können auch Piezo-Kristalle zur Anregung herangezogen werden.

## Patentansprüche

1. Vorrichtung zum lagerichtigen Bereitstellen von, insbesondere kopflastigen, Kleinteilen (4), wobei die Vorrichtung ein Magazin (1) zur Aufnahme der Kleinteile (4) umfasst, **dadurch gekennzeichnet, dass** die Vorrichtung einen Schwingungserreger (2) zum Vibrieren des Magazins (1) mit einer vorgegebenen Frequenz umfasst.

2. Vorrichtung nach Anspruch 1, **dadurch gekennzeichnet, dass** das Magazin (1) in Form einer Platte vorliegt, in deren Oberfläche zumindest eine insbesondere an die Form der Kleinteile angepasste Ausnehmung (3) zur Aufnahme der Kleinteile (4) ausgebildet ist.

3. Vorrichtung nach Anspruch 1 oder 2, **dadurch gekennzeichnet, dass** in der in Gebrauch nach oben gerichteten Seite des Magazin (1) zumindest eine oberflächlich ausgenommene, fortlaufende nutförmige Ausnehmung (3) ausgebildet ist.

4. Vorrichtung nach einem der vorangehenden Ansprüche, **dadurch gekennzeichnet, dass** die zumindest eine nutförmige Ausnehmung (3) spiralförmig oder gerade verläuft oder aufeinanderfolgend gekrümmte und gerade Abschnitte aufweist.

5. Vorrichtung nach einem der vorangehenden Ansprüche, **dadurch gekennzeichnet, dass** der Querschnitt der nutförmigen Ausnehmung (3) über die gesamte Längserstreckung identisch ist.

6. Vorrichtung nach einem der vorangehenden Ansprüche, **dadurch gekennzeichnet, dass** an der die nutförmige Ausnehmung (3) tragenden Oberfläche des Magazins ein Ring (30) vorgesehen ist, der einen Teil des Oberflächenbereichs des Magazins (1), in dem die nutförmige Ausnehmung (3) vorliegt, insbesondere den gesamten Oberflächenbereich bis auf einen Auslassbereich der nutförmigen Ausnehmung (3) des Magazins, verschließt.

7. Vorrichtung nach einem der vorangehenden Ansprüche, **dadurch gekennzeichnet,**
**dass** mit dem Schwingungserreger (2) auf das Magazin (1) eine Vibration in Form einer sich laufend umkehrenden Rotationsbewegung oder einer linearen Hin- und Herbewegung ausübbar ist, wobei diese Bewegungen periodisch erfolgen und bezüglich ihrer Frequenz einstellbar sind. und/oder
**dass** die Vibration, insbesondere die Rotationsschwingung oder die lineare Schwingbewegung, in einer Ebene parallel zur Oberfläche des Magazins (1) erfolgt, in der die nutförmige Ausnehmung (3) ausgebildet ist.

8. Vorrichtung nach einem der vorangehenden Ansprüche, **dadurch gekennzeichnet, dass** der Schwingungserreger (2) auf eine niedrige, insbesondere die zweitniedrigste, Resonanzfrequenz des vom Magazin (1) und der Schwingplatte (6) des Schwingungserregers (2) gebildeten Schwingsystems, gegebenenfalls mit Abweichungen von ±10%, vorzugsweise von ±5%, von dieser Resonanzfrequenz einstellbar oder eingestellt ist.

9. Vorrichtung nach einem der vorangehenden Ansprüche, **dadurch gekennzeichnet, dass** der Schwingteil bzw. die Schwingplatte (6) des Schwingungserregers (2) mit dem Magazin (1) direkt und starr verbunden, vorzugsweise verschraubt, ist
und/oder
Vorrichtung nach einem der vorangehenden Ansprüche, **dadurch gekennzeichnet,**
**dass** der kleinste bzw. innerste Radius einer spiralförmigen Ausnehmung (3) so groß vorgegeben ist, dass die Kleinteile (4) bei Vibration des Magazins (1) in diesem Bereich in der Ausnehmung (3) verklemmungsfrei förderbar sind,
und/oder
**dass** das randnahe Ende der nutförmigen Ausnehmung (3), vorzugsweise annähernd geradlinig, zum Rand der Platte bzw. des Magazins (1) hingeführt ist und dort eine, gegebenenfalls verschließbare, Abgabeöffnung (13) ausbildet.

10. Vorrichtung nach einem der Ansprüche 1 bis 10, **dadurch gekennzeichnet, dass** auf der Oberfläche des Magazins (1) eine bzw. ein einen Schüttbereich für die Klemmteile (4) und die Ausnehmung (3) nach oben begrenzende Kontaktplatte oder Abstreifer (17) aufliegt bzw. mit dem Magazin (1) verbunden ist, die bzw. der gegebenenfalls als Teil des Schwingsystems bei Ermittlung der Resonanzfrequenz Berücksichtigung findet.

11. Verfahren zum lagerichtigen Beschicken eines Magazins (1) mit, insbesondere kopflastigen, Kleinteilen (4), wobei das Magazin (1) zumindest eine oberflächlich ausgenommene, fortlaufende nutförmige Ausnehmung (3) zur Aufnahme und gegebenenfalls zum Fördern der Kleinteile (4) aufweist, **dadurch gekennzeichnet, dass** die in beliebiger Ausrichtung auf die zumindest eine nutförmige Ausnehmung (3) aufweisende Oberfläche des Magazins (1) aufgebrachten Kleinteile (4) durch dem Magazin (1) erteilte Vibrationen in die Ausnehmung (3) eingeordnet werden.

12. Verfahren nach Anspruch 11, **dadurch gekennzeichnet, dass** eine Resonanzfrequenz des vom Magazin (1) und dem bzw. der damit starr verbundenen Schwingteil bzw. Schwingplatte (6) eines Schwingungserregers (2) gebildeten Schwingsystems ermittelt und das Schwingsystem mit dieser Frequenz, vorzugsweise mit Abweichungen von ±10%, insbesondere ±5%, vibriert wird.

13. Verfahren nach Anspruch 11 oder 12, **dadurch gekennzeichnet, dass** das Schwingsystem mit einer niedrigen Resonanzfrequenz, vorzugsweise der zweit- oder drittniedrigsten Resonanzfrequenz, vibriert wird.

14. Verfahren nach einem der Ansprüche 11 bis 13, **dadurch gekennzeichnet,**
**dass** das Magazin (1) in einer Richtung vibriert bzw. zur Vibration durch den Schwingungserreger (2) angeregt wird, die an die überwiegende Richtung des Verlaufs der nutförmigen Ausnehmung (3) angepasst bzw. angenähert ist bzw. den Abschnitten des Verlaufs der Ausnehmung (3) möglichst angenähert ist, die annähernd in derselben Richtung ausgerichtet sind
und/oder
**dass** das Magazin (1) mit einer sich laufend umkehrenden, insbesondere periodischen, Rotationsbewegung oder linearen Bewegung vibriert wird, wobei vorzugsweise die Richtung der Rotationsbewegung bzw. der linearen Bewegung normal zur Querschnittsebene der nutförmigen Ausnehmung (3) steht
und/oder
**dass** der aus der Ausnehmung (3) herausragende Abschnitt von mit Fehllage in der Ausnehmung (3) beförderten Kleinteilen angestoßen bzw. angehalten wird und dabei die Kleinteile (4) in eine Lage verstellt werden, in der sie durch Vibration in die Ausnehmung (3) eingeordnet werden können.

15. Verfahren nach einem der Ansprüche 11 bis 14, **dadurch gekennzeichnet, dass** die nutförmige Ausnehmung (3) derart von der Seite, des Magazins (1) her abgedeckt wird, die die nutförmige Ausnehmung (3) trägt, dass im Inneren der nutförmige Ausnehmung (3) ein durchgängiger Kanal ausgebildet wird, und/oder
auf der selben Oberflächenseite des Magazins (1), an der auch die nutförmige Ausnehmung (3) vorgesehen ist, eine Abdeckplatte derart montiert wird, dass ein durch die nutförmige Ausnehmung (3) und die Abdeckplatte begrenzter, insbesondere mit Druckluft beaufschlagbarer, Kanal entsteht.
